# EUROPÄISCHE PATENTANMELDUNG

(11) **EP 1 213 308 A1**
(43) Veröffentlichungstag der Anmeldung: **12.06.2002**
(21) Anmeldenummer: 01128719.0
(22) Anmeldetag: 03.12.2001
(51) Int. Cl.: C08G 18/08, C08G 18/65, C09D 175/14, C09D 5/20

(54) **Abziehbare Folie für den Oberflächenschutz**

(30) Priorität: 05.12.2000 DE 10060673
(71) Anmelder: Hemmelrath Lackfabrik GmbH, 63911 Klingenberg/Main (DE)
(72) Erfinder: Ruppenstein, Marcus, 63743 Aschaffenburg (DE)
(74) Vertreter: Schweitzer, Klaus, Dr.

(57) **Zusammenfassung**

Wäßrige Beschichtungszubereitung zur Herstellung von entfernbaren Schutzbeschichtungen, enthaltend eine wäßrige Dispersion eines Polyurethans **A**, das Bausteine abgeleitet von Polydienen enthält, ein Polysiloxan **B**, das vorzugsweise frei von aromatischen Gruppen ist und vorzugsweise keine Hydroxyl- oder Aminogruppen enthält, sowie gegebenenfalls Pigmente **C** und weitere Additive **D**, ausgewählt aus hochdisperser Kieselsäure, Entschäumungsmitteln, Benetzungsmitteln, Verstärkungsmitteln, Verlaufshilfsmitteln, Verdickern und Antiabsetzmitteln. Die Schutzschichten lassen sich durch beliebige Verfahren aufbringen und ohne Beschädigung des Substrats einfach entfernen.

## Beschreibung

Die vorliegende Erfindung betrifft eine Schutzfolie insbesondere für fabrikneue Kraftfahrzeuge oder andere unlackierte oder lackierte Gegenstände, die zum Schutz der Oberfläche vor Umwelteinflüssen dient.

Fabrikneue Kraftfahrzeuge werden nach ihrer Herstellung üblicherweise mit einer Schutzschicht versehen, die die Oberfläche, insbesondere den Lack, vor schädigenden Umwelteinflüssen, insbesondere saurem Regen, und auch vor mechanischer Beschädigung durch Kratzer schützen soll. Bisher werden für diesen Zweck vielfach Schichten aus Wachs eingesetzt. Diese Wachsschicht muß vor der Auslieferung mit heißem Wasser und Lösungsmitteln entfernt werden; die dabei anfallenden Abwässer bedeuten eine erhebliche Umweltbelastung.

Zahlreiche Versuche zur Lösung der Probleme sind aus der Patentliteratur bekannt. So wurde die weiche Wachsschicht durch Beschichtungen aus Polymeren ersetzt, die entweder aus Lösungen oder Dispersionen (mit Lösungsmitteln: DE-C 41 10 098 und DE-C 41 09 136; aus wäßriger Dispersion: DE-A 42 36 672) oder direkt als Folie (DE-A 42 23 822, DE-A 42 34 712) auf das fertige Kraftfahrzeug aufgebracht werden. Der Auftrag als Folie erfolgt per Hand oder durch Aufbürsten mit rotierenden Walzen, dabei ist der Schutz bei unebenen Karosserieflächen oder Einbuchtungen häufig unzureichend.

Die Folien lassen sich in großen zusammenhängenden Stücken oder vorzugsweise als ganzes wieder von der zu schützenden Oberfläche, insbesondere von einem Kraftfahrzeug, entfernen.

Soweit Beschichtungen aus wäßrigen Schutzlacken aufgebracht werden, ist bekannt, sie durch Behandeln der Karosse mit wäßrigen Alkalien wieder abzulösen (DE-A 42 36 672). Dabei entstehen ebenfalls wie im Falle der Wachse belastete Abwässer. Andererseits sind bei den mechanisch abziehbaren Schutzbeschichtungen, die als Flüssigbeschichtung aufgebracht werden (DE-C 41 10 098 und DE-C 41 09 136), lösungsmittelhaltige Systeme bekannt, die beim Trocknen nach der Applikation Lösungsmittel in die Atmosphäre abgeben.

Aus der DE-A 196 52 728 ist das Besprühen eines Kraftfahrzeugs mit einer wäßrigen Dispersion auf Vinylester- oder Acrylester-Basis bekannt. Nach Verdunsten des Wassers bildet sich ein Kunststoffilm, der durch Abziehen entfernbar ist. Gemäß der EP-A 0 750 949 ist eine Beschichtung herstellbar durch Auftragen einer wäßrigen Dispersion eines Acrylharzes mit Zusatz eines UV Absorbers. Die Beschichtung ist mit Hand oder mit Druckwasser ablösbar.

Diese bekannten Beschichtungen weisen jedoch ungenügende Beständigkeit gegen chemische Einwirkungen (Verseifung durch Einwirkung von Säuren oder Laugen) oder Lösungsmittel auf. Häufig ist auch die Haftung auf Klarlackschichten, insbesondere polierten Klarlackschichten, zu groß, so daß bei Abziehen des Schutzfilms die oberste Schicht der Lackierung beschädigt oder teilweise mit abgezogen wird.

Es besteht daher die Aufgabe, solche flüssigen Beschichtungssysteme für empfindliche Flächen bereitzustellen, die aus wäßriger Phase ohne Zusatz von Lösungsmitteln oder mit nur geringen Lösungsmittelanteilen applizierbar sind, und die nach dem Trocken feste und zähe Filme bilden, die einen wirksamen Schutz gegen Umwelteinflüsse bieten, beständig gegen (alkalisch oder sauer katalysierte) Verseifung und gegen Lösungsmittel sind, und die sich als Ganzes oder in großen Stücken von der zu schützenden Oberfläche (z. B. einer Automobil-Karosse) abziehen lassen.

Es wurde gefunden, daß wäßrige Beschichtungszubereitungen auf Basis von wäßrigen Polyurethan-Dispersionen, die bestimmte Polysiloxane enthalten, auch auf geneigten und senkrechten Flächen nur geringen bis keinen Ablauf zeigen, und ausgehärtete Schutzfilme mit hervorragender chemischer Beständigkeit, geringer Spannungsrißbildung, hoher mechanischer Schutzwirkung und Licht- und UV-Beständigkeit ergeben, wobei sich die Schutzfilme von dem Substrat mit nur geringem Kraftaufwand vollständig abziehen lassen.

Gegenstand der Erfindung ist daher eine Beschichtungszubereitung, enthaltend
- eine wäßrige Dispersion eines Polyurethans A, das Bausteine abgeleitet von Polydienen enthält,
- ein Polysiloxan **B**, das vorzugsweise frei von aromatischen Gruppen ist und vorzugsweise keine Hydroxyl- oder Aminogruppen enthält,
- gegebenenfalls Pigmente **C**, sowie gegebenenfalls
- weitere Additive **D**, ausgewählt aus hochdisperser Kieselsäure, Entschäumungsmitteln, Benetzungsmitteln, Verlaufshilfsmitteln, Verstärkungsmitteln, Verdickern und Antiabsetzmitteln.

Bevorzugt enthält die erfindungsgemäße Beschichtungszubereitung keine organischen Lösungsmittel, es ist jedoch möglich, Lösungsmittel in einer Menge von bis zu 5 % der Masse der Beschichtungszubereitung zur Verbesserung der Filmbildung zuzusetzen.

Die wäßrige Dispersion des Polyurethans **A** enthält einen Massenanteil von 30 bis 75 % eines Polyurethans, das durch Umsetzung von Polydienen **A1**, die mindestens zwei mit Isocyanaten reaktive Gruppen tragen, Polyolen **A2**, die mindestens eine Säuregruppe tragen, mehrfunktionellen Isocyanaten **A3** und Kettenverlängerungsmitteln **A4** erhältlich ist.

Die Polydiene **A1** sind insbesondere Telechele, d. h. sie tragen reaktive Gruppen an den Kettenenden. Bevorzugt sind Polydiene mit zwei reaktiven Gruppen, die ausgewählt sind aus Hydroxylgruppen, Aminogruppen oder Mercaptogruppen, und die mit Isocyanaten unter Bildung von Urethanen, Harnstoffen oder Thiourethanen reagieren. Sie werden hergestellt insbesondere durch radikalisch initiierte Polymerisation von aliphatischen linearen, verzweigten oder cyclischen Verbindungen mit mindestens zwei konjugierten Doppelbindungen und 4 bis 20 Kohlenstoffatomen. Als Initiator werden solche Radikalbildner eingesetzt, die beispielsweise Hydroxylgruppen am Kettenende erzeugen, wie Wasserstoffperoxid, oder Azoverbindungen wie 2,2'-Azobis-(2-methyl-N-(2-hydroxyäthyl)propionamid). Eine andere Weise zur Erzeugung der Polydienen ist die anionische Polymerisation, beispielsweise gestartet mit Dilithiumnaphthalin. Bei Abbruch der Polymerisation läßt sich die Endgruppe durch geeignete Wahl der Abbruchmittel bestimmen. Geeignete ungesättigte Kohlenwasserstoffe sind besonders Diene, wie Butadien, Isopren, Chloropren, 1,3-Pentadien und Cyclopentadien, diese lassen sich auch in Mischung copolymerisieren. Besonders bevorzugt werden Polybutadiene mit 2 Hydroxylgruppen als Endgruppen, insbesondere solche mit einer zahlenmittleren molaren Masse Mₙ von ca. 1000 bis 15 000 g/mol.

Als Polyole **A2** mit mindestens einer Säuregruppe werden Dihydroxycarbonsäuren mit 4 bis 8 Kohlenstoffatomen wie Bishydroxymethylpropionsäure und Bishydroxymethylessigsäure oder Weinsäure bevorzugt. Ebenso geeignet sind beispielsweise Dihydroxysulfonsäuren wie N,N-Bis-(2-hydroxyäthyl)-2-aminoäthansulfonsäure und N,N-Bis-(2-hydroxyäthyl)3-amino-2-hydroxypropansulfonsäure. Anstelle der Polyole **A2** oder in Mischung mit ihnen lassen sich auch Amine mit mindestens zwei primären oder sekundären Aminogruppen oder Mercaptane mit mindestens zwei Mercaptogruppen und jeweils mindestens einer Säuregruppe einsetzen, Beispiele sind Diaminocarbonsäuren wie Ornithin oder Dimercaptosulfonsäuren wie 2,3-Dimercaptopropansulfonsäure, Beispiel für Moleküle mit gemischten mit Isocyanat reaktive Gruppen sind Serin (-OH und -NH₂) und Cystein (-SH und -NH₂).

Die mehrfunktionellen Isocyanate **A3** sind bevorzugt aliphatische lineare, verzweigte und cyclische Isocyanate wie 1,4-Tetramethylendiisocyanat, 1,6-Hexamethylendiisocyanat (HDI), 2,2,4,- und 2,4,4-Trimethylhexandiisocyanat, Dodecamethylendiisocyanat, 1,4-Diisocyanatocyclohexan, 1-Isocyanato-3,3,5-trimethyl-5-isocyanatomethyl-cyclohexan (Isophorondiisocyanat, IPDI) und Bis-(4-isocyanatocyclohexyl)methan (HMDI). Es lassen sich auch solche gemischt aromatisch-aliphatischen Isocyanate einsetzen, bei denen die Isocyanatgruppe an aliphatische Kohlenstoffatome gebunden ist, wie z. B. Tetramethylxylylendiisocyanat. Gleichfalls geeignet sind die durch partielle Reaktion mit Alkoholen und nachfolgende Addition gebildeten Allophanate und die durch partielle Reaktion mit Wasser und nachfolgende Addition gebildeten Biurete, sowie die durch Trimerisieren gebildeten Isocyanurate und die durch Reaktion mit mehrwertigen Alkoholen wie z. B. Trimethylolpropan gebildeten Addukte. Weniger bevorzugt, aber ebenfalls für die Erfindung geeignet sind aromatische Isocyanate, soweit sie in Mischung mit den bevorzugten (cyclo)aliphatischen Isocyanaten eingesetzt werden, insbesondere Diisocyanate wie 4,4'-Diphenylmethandiisocyanat (MDI), 2,4- und 2,6-Toluylendiisocyanat und deren technische Gemische (TDI), sowie 1,3- und 1,3-Phenylendiisocyanat, Diisocyanatonaphthalin und Triphenylmethantriisocyanat, sowie die von diesen abgeleiteten Isocyanurate, Uretdione, Allophanate und Biurete.

Geeignete Kettenverlängerungsmittel **A4** sind Verbindungen mit mindestens zwei gegenüber Isocyanat reaktiven Wasserstoffatomen, die in wäßriger Lösung oder Dispersion schneller mit dem Isocyanat reagieren als Wasser. Darunter fallen insbesondere Amine mit mindestens zwei primären oder sekundären oder mindestens einer primären und mindestens einer sekundären Aminogruppe, sowie Dimercaptane und Aminomercaptane mit einer primären oder sekundären Aminogruppe. Bevorzugt werden lineare und verzweigte aliphatische Diamine mit 2 bis 9 Kohlenstoffatomen wie Äthylendiamin, 1-4-Diaminobutan, 1,6-Diaminohexan, 2,2,4-und 2,4,4-Trimethyl-1-6-diaminohexan und Neopentandiamin.

Als Lösungsmittel zur Herstellung der Polyurethane **A** lassen sich vor allem solche organischen Verbindungen verwenden, die ein ausreichendes Lösevermögen und eine Siedetemperatur unter ca. 120 °C aufweisen, und die nicht selber mit Isocyanaten reagieren. Bevorzugt werden Ketone wie Aceton, Methyläthylketon, Methylisopropylketon und Diäthylketon. Ebenso einsetzbar sind Ester von aliphatischen Alkoholen mit (aliphatischen) Carbonsäuren, wie Äthylacetat, Isopropylacetat, Propylacetat, IsobutylacetatundDimethylcarbonat.

Die erfindungsgemäßen Polyurethandispersionen werden bevorzugt so hergestellt, indem eine Mischung der Polydiene **A1** und der Säuregruppen-haltigen Polyole **A2** in einem inerten Lösungsmittel vorgelegt wird, auf die gewünschte Reaktionstemperatur von 30 bis 100 °C, bevorzugt 50 bis 90 °C, und insbesondere 60 bis 80 °C erwärmt wird. Das Neutralisationsmittel für die Komponente **A2** wird gleichzeitig mit dieser zugegeben oder es wird zunächst eine Lösung der Komponente **A1** in dem Lösungsmittel hergestellt, zu der dann das Neutralisationsmittel zugesetzt und anschließend erst das Polyol **A2** hinzugefügt wird. Zu der Lösung des neutralisierten Polyols **A2** und des Polydiens **A1** wird anschließend bei der oben genannten Reaktionstemperatur das Isocyanat **A3** zugesetzt. Dabei findet üblicherweise ein weiterer Anstieg der Reaktionstemperatur statt. Die Reaktionsmischung wird dann solange bei der gewählten Temperatur unter guter Durchmischen belassen, bis der gewünschte Polymerisationsgrad (bestimmt über den Staudinger-Index ***J***₀ des gebildeten Präpolymeren) erreicht ist. Dann wird das Präpolymer in Wasser dispergiert, wobei (bevorzugt) sowohl Wasser zu der Harzlösung zugesetzt werden kann oder umgekehrt (weniger bevorzugt) die Harzlösung in Wasser eingerührt wird. Es ist bevorzugt, das Wasser auf die Reaktionstemperatur oder auf eine Temperatur höchstens 20 °C unter der Reaktionstemperatur, also auf eine Temperatur von ca. 60 °C bis ca. 95 °C, zu erwärmen. Während dieses Mischungsvorgangs wird bevorzugt bereits damit begonnen, die azeotrope Mischung aus Wasser und dem eingesetzten Lösungsmittel abzudestillieren. Sobald die Mischung vollständig ist (d. i. sobald die gesamte Wassermenge in die Harzlösung eingerührt worden ist bzw. die gesamte Harzlösung in das Wasser eingerührt ist), wird das Kettenverlängerungsmittel **A4** zugefügt. Durch die Reaktion des Kettenverlängerungsmittels mit den im Präpolymeren noch vorhandenen Isocyanatgruppen ergibt sich einen weitere Wärmetönung, die die Destillation des Azeotrops unterstützt. Die Reaktionsmischung wird dann weiter beheizt, bis das gesamte eingesetzte Lösungsmittel abdestilliert ist, und eine Dispersion des gebildeten Polyurethans in Wasser verbleibt. Durch Zusatz von weiterem Wasser oder durch Fortsetzen der Destillation kann der Festkörper-Massenanteil auf den gewünschten Wert zwischen 30 und 75 % (bevorzugt ca. 50 % oder mehr) eingestellt werden.

Das Polysiloxan **B** ist bevorzugt frei von aromatischen Bausteinen sowie auch von Amino- oder Hydroxylgruppen, es genügt bevorzugt der Formel 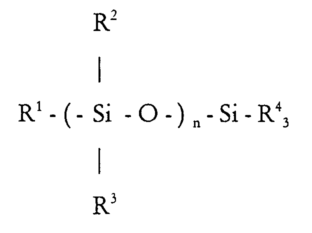 wobei R² und R³ gleich oder verschieden sein können und Alkylreste mit 1 bis 6 Kohlenstoffatomen oder Arylreste bedeuten, bevorzugt Methyl-, Äthyl-, Isopropyl- oder Phenyl-Reste, die Reste R⁴ untereinander verschieden oder gleich sein können und ebenso wie R¹ aus Alkylreste mit 1 bis 6 Kohlenstoffatomen ausgewählt sind, wobei Methylreste bevorzugt werden. Es ist ebenso bevorzugt, für den Rest R² und insbesondere für beide Reste R² und R³ Methyl einzusetzen. Der Polymerisationsgrad n ist bevorzugt so zu wählen, daß die Viskosität des Polysiloxans 0,65 bis 500, bevorzugt 1 bis 100, und besonders bevorzugt 5 bis 50 mm²/s beträgt.

Die Pigmente **C** verbessern die Beständigkeit der Schutzschicht insbesondere in Klimazonen, in denen die zu schützende Oberfläche intensiver Sonneneinstrahlung ausgesetzt ist, gegebenenfalls kombiniert mit höherer Temperatur und/oder höherer Luftfeuchtigkeit. Bevorzugt werden anorganische Weißpigmente wie Titandioxid, Zinksulfid, Bariumsulfat oder deren Mischungen, insbesondere Titandioxid-Pigmente auf Basis von Rutil. Besonders bevorzugt werden Titandioxid-Pigmente mit einer Schüttdichte von 3,8 bis 4,2 kg/l.

Als Additive **D** werden Dispergierhilfsmittel wie hochdisperse Kieselsäure, Entschäumungsmittel auf Basis von (anionischen oder nichtionischen) Tensiden oder Siliconen, Benetzungsmittel, Verlaufshilfsmittel, Verdicker insbesondere auf Basis von Polyurethanen, Acrylatcopolymeren, Saccharid- (Xanthan- und Guar-)Derivaten oder Cellulosederivaten, und Antiabsetzmittel wie hochdisperse Kieselsäure oder Bentonite eingesetzt. Besonders bevorzugt ist, Verdicker einzusetzen, die eine starke Scherverdünnung zeigen.

Die Abziehbarkeit der Filme kann durch Verstärkungs- oder Armierungsmittel verbessert werden. Besonders geeignet hierfür sind Fasern auf Basis von natürlichen (Cellulosefasern aus Holzschliff oder Baumwoll-Linters, Hanf- oder Sisal-Fasern) oder synthetischen Polymeren (Acrylfasern aus Polyacrylnitril(co)polymeren, Polyamidfasern, Polyesterfasern, Polyolefinfasern), wobei die unter starker Scherung aus Lösung gesponnenen Pulp-Fasern besonders bevorzugt werden.

Die erfindungsgemäßen wäßrigen Beschichtungssysteme enthalten bevorzugt Massenanteile (bezogen auf die Summe der Massen der von Wasser verschiedenen Anteile) von 10 bis 30 % des Polyurethanharzes **A**, 0,05 bis 5 % des Polysiloxans **B**, 5 bis 20 % des Pigments **C** sowie 2 bis 35 % von Additiven **D**.

Sie lassen sich ohne Bildung von sogenanntem "Overspray" auf Automobilkarossen im "airless"-Spritzverfahren applizieren. Dies ist ein für die Wirtschaftlichkeit außerordentlich wichtiger Gesichtspunkt. Je nach der gewünschten Applikationstechnik läßt sich durch Zugabe von Verdickern in geeigneter Art und Menge die Applikationsviskosität einstellen. Beispielsweise ist es auch möglich, für den Auftrag mit Breitschlitzdüsen die Viskosität und die Kohäsion des Beschichtungssystems anzupassen.

Weiterer Gegenstand der Erfindung ist die Verwendung dieser wäßrigen Beschichtungszubereitungen zur Beschichtung von insbesondere lackierten Gegenständen oder gegen Umwelteinflüsse empfindlichen anderen Oberflächen wie denen von blanken Metallen, Glas oder Kunststoffen, zum Schutz gegen schädliche Umweltteinflüsse wie Kondens- oder Regenwasser, insbesondere sauren Regen, Ausbleichen oder Verkreiden von Oberflächen durch Einwirkung von Sonnenlicht, und mechanische Beschädigung wie Kratzer oder Riefen.

Zu diesem Zweck wird eine Schicht durch Applikation der erfindungsgemäßen Beschichtungszubereitung auf die zu schützende Oberfläche aufgetragen. Die Beschichtung kann in bekannter Weise durch Sprühen aufgetragen werden. Dabei verbleibt auf den horizontalen oder nur schwach geneigten Flächen üblicherweise mehr Flüssigkeit stehen, während sie auf den senkrechten oder stark geneigten Flächen eher zum Ablaufen neigt. Die Ablaufneigung ist bei den erfindungsgemäßen Beschichtungszubereitungen deutlich geringer als bei denen des Standes der Technik. Durch Zusatz von Thixotropiermitteln in der erforderlichen Art und Menge kann erreicht werden, daß auch auf den senkrechten oder stark geneigten (Neigungswinkel gegenüber der Horizontalen von über 30 °) das flüssige Beschichtungsmittel unmittelbar nach dem Auftragen in ausreichender Schichtstärke stehenbleibt, um nach dem Trocknen einen Schicht mit einer Dicke von mindestens 100 µm, bevorzugt über 150 µm, zu bilden, die zum Schutz der darunterliegenden Fläche ausreichend ist.

Die Erfindung wird durch das nachfolgende Beispiel erläutert:

### Beispiel

700 g einer 50 %igen wäßrigen Dispersion eines Polyurethans, das einen Massenanteil von ca. 70 % von Polybutadien abgeleiteten Bausteinen im Festkörper des Harzes enthält, wurden gemischt mit 5 g einer hochdispersen Kieselsäure (® Aerosil R 972, Degussa-Hüls AG), 20 g eines Dimethylpolysiloxans mit einer Viskosität von ca. 10 mm/s², 2 g eines handelsüblichen Entschäumers, 7 g eines handelsüblichen Untergrundbenetzungsmittels auf Basis eines Polyäther-modifizierten Dimethylpolysiloxans, 3 g einer 52 %igen Lösung eines handelsüblichen Verlaufsmittels auf Basis eines Polyäther-modifizierten Dimethylpolysiloxans in 2-Methoxymethyläthoxypropanol, 175 g eines handelüblichen Titandioxidpigments und 25 g einer 3 %igen wäßrigen Dispersion eines handelsüblichen Verdickungsmittels auf Basis eines neutralisierten Acrylcopolymeren und 63 g entionisiertem Wasser. Die Mischung wurde auf einer Perlmühle ca. 20 Minuten dispergiert, bevor der Verdicker zugesetzt wurde. Durch Zusatz von weiterem Wasser wurde auf die gewünschte Viskosität von ca. 1200 mPa·s bei 23 °C und einer Schergeschwindigkeit von 1000 s⁻¹ eingestellt.

Das wäßrige Beschichtungsmittel hatte einen Festkörper-Massenanteil von ca. 56 %, das Verhältnis der Masse von Pigment und der Masse des Bindemittels betrug ca. 1:2, der pH-Wert war ca. 7,5.

Mit diesem Beschichtungsmittel wurden auf Prüfblechen mit einem Lackaufbau aus kataphoretisch applizierter Tauchlackierung, einem Füller, einer Basislackschicht (Wasserbasislack) und einem üblichen Einbrenn-Klarlack bei einer Temperatur von ca. 20 °C eine ca. 120 µm dicke Schicht (Trockenschichtdicke) eine Schutzschicht aufgebracht. Die blasenfreie Schicht wurde ca. 5 Minuten bei Raumtemperatur abgelüftet und anschließend bei ca. 70 °C während 5 Minuten getrocknet.

Die beschichteten Bleche wurden bei Raumtemperatur (ca. 20 °C) 2 Stunden belassen, danach wurde die Folie abgezogen. Sie ließ sich ohne Reißen als ganzes Stück von den lackierten Blechen abziehen, wobei sich keine Verletzungen oder Mattstellen oder Lackablösungen der Klarlackschicht zeigten.

Die Schutzwirkung der Schutzbeschichtung wurde gemäß der folgenden Tabelle getestet:

| | Schwitzwassertest | Temperaturbelastungstest | Temperaturwechseltest | UV-Beständigkeit | Freibewitterung |
|---|---|---|---|---|---|
| Norm | DIN 50017 KK | 3 h bei 80 °C | 10 Zyklen* | Sun-Test, 240 h | Miami FL Phoenix AZ |
| Zeit nach Entfernung der Schutzbeschichtung | | | | | |
| sofort | 3 | 2 bis 3 | 3 | 3 | 1 |
| 24 Stunden bei Raumtemperatur | 1 | 1 bis 2 | 1 | 1 | 0 bis 1 |
| nach 10 Minuten bei 80 °C | 0 | 0 bis 1 | 1 | 1 | |

| | | | | | |
|---|---|---|---|---|---|
| *Zyklen für den Temperatur-Wechseltest: 4 Stunden bei - 30 °C 16 Stunden bei + 90 °C 4 Stunden Normal-Temperatur (20 °C) | | | | | |

Die Testergebnisse wurden nach einer Skala bewertet, wobei 0 "keine Veränderung" bedeutet, und 5 für "erhebliche Schädigung" steht. Aus den Ergebnissen ist zu sehen, daß nur kurz nach Entfernung der Schutzschicht der darunterliegende Lack noch empfindlich gegen Schädigung aus der Umwelt ist, während nach kurzer Zeit keinerlei Beeinträchtigung mehr festzustellen ist.

## Patentansprüche

1. Wäßrige Beschichtungszubereitung zur Herstellung von entfernbaren Schutzbeschichtungen, enthaltend
- eine wäßrige Dispersion eines Polyurethans **A**, das Bausteine abgeleitet von Polydienen enthält,
- ein Polysiloxan **B**, das vorzugsweise frei von aromatischen Gruppen ist und vorzugsweise keine Hydroxyl- oder Aminogruppen enthält,
- gegebenenfalls Pigmente **C**, sowie gegebenenfalls
- weitere Additive **D**, ausgewählt aus hochdisperser Kieselsäure, Entschäumungsmitteln, Benetzungsmitteln, Verstärkungsmitteln, Verlaufshilfsmitteln, Verdickern und Antiabsetzmitteln.

2. Wäßrige Beschichtungszubereitung nach Anspruch 1, **dadurch gekennzeichnet, daß** das Polyurethan **A** Bausteine abgeleitet von Polybutadien enthält.

3. Wäßrige Beschichtungszubereitung nach Anspruch 1, **dadurch gekennzeichnet, daß** das Polysiloxan **B** ein Polydimethylsiloxan mit einer Viskosität von 0,65 bis 500 mm²/s ist.

4. Wäßrige Beschichtungszubereitung nach Anspruch 1, **dadurch gekennzeichnet, daß** ein Titandioxid-Pigment **C** eingesetzt wird.

5. Wäßrige Beschichtungszubereitung nach Anspruch 1, **dadurch gekennzeichnet, daß** sie Massenanteile von 10 bis 30 % des Polyurethanharzes **A**, 0,05 bis 5 % des Polysiloxans **B**, 5 bis 20 % eines Titandioxidpigments **C** sowie 2 bis 15 % von Additiven **D** sowie Wasser enthält.

6. Wäßrige Beschichtungszubereitung nach Anspruch 1, **dadurch gekennzeichnet, daß** sie ein Verstärkungsmittel ausgewählt aus natürlichen und synthetischen Fasern enthält.

7. Wäßrige Beschichtungszubereitung nach Anspruch 1, **dadurch gekennzeichnet, daß** sie Fasern ausgewählt aus Cellulosefasern und aus Lösung gesponnenen Polyacrylnitril- und Polyolefinfasern enthält.

8. Verwendung der wäßrigen Beschichtungszubereitungen nach Anspruch 1 zur Herstellung von entfernbaren Schutzbeschichtungen.

9. Verwendung der wäßrigen Beschichtungszubereitungen nach Anspruch 7 zur Herstellung von entfernbaren Schutzbeschichtungen.

10. Verwendung nach Anspruch 8 zum Schutz von fabrikneuen lackierten Automobilen vor Umwelteinwirkungen.

11. Verwendung nach Anspruch 9 zum Schutz von fabrikneuen lackierten Automobilen vor Umwelteinwirkungen.
